# EUROPÄISCHE PATENTSCHRIFT

(11) **EP 3 411 891 B1**
(45) Veröffentlichungstag und Bekanntmachung des Hinweises auf die Patenterteilung: **19.01.2022**
(21) Anmeldenummer: 16715254.5
(22) Anmeldetag: 21.03.2016
(51) Int. Cl.: H01G 11/78, H01G 2/10, H01G 4/224, H01G 2/08, H01G 4/38, H01G 11/18, H01G 4/40, H01G 11/08, H01L 23/40, H01G 11/10

(54) **ELEKTRISCHE EINRICHTUNG MIT KÜHLVORRICHTUNG UND AKUSTISCHEM DÄMPFUNGSMITTEL UND ELEKTRISCHE ANLAGE UMFASSEND DIE ELEKTRISCHE EINRICHTUNG**
ELECTRICAL DEVICE WITH COOLING DEVICE AND ACOUSTIC DAMPING DEVICE AND ELECTRICAL APPARATUS COMPRISING THE ELECTRICAL DEVICE
DISPOSITIF ÉLECTRIQUE COMPRENANT UN DISPOSITIF DE REFROIDISSEMENT ET UN DISPOSITIF D'ATTÉNUATION ACOUSTIQUE ET APPAREIL ÉLECTRIQUE COMPRENANT LE DISPOSITIF ÉLECTRIQUE

(43) Veröffentlichungstag der Anmeldung: 12.12.2018
(73) Patentinhaber: Siemens Energy Global GmbH & Co. KG, 81739 München (DE)
(72) Erfinder: AGRELI, Henrique, 13207-340 Jundiai - SP (BR); CHRISTMANN, Jean Marc, 90427 Nürnberg (DE); HARTMANN, Werner, 91085 Weisendorf (DE); YAMAZAKI, Sergio, 07024-010 Guarulhos (BR)
(86) Internationale Anmeldenummer: PCT/EP2016/056133
(87) Internationale Veröffentlichungsnummer: WO 2017/162264

(56) Entgegenhaltungen:
- EP-A2- 1 612 769
- WO-A2-2011/018434
- CN-A- 104 471 637
- CN-Y- 201 178 032
- DE-A1-102010 032 936
- DE-U1-202015 000 224
- JP-A- 2001 326 131
- JP-A- 2014 019 248
- US-A1- 2007 158 946
- US-A1- 2008 182 499
- US-A1- 2011 089 911
- US-A1- 2014 361 544

## Beschreibung

Die Erfindung betrifft eine elektrische Einrichtung mit wenigstens einer elektrischen Komponente, die in einem Gehäuse angeordnet ist, das eine Kühlvorrichtung aufweist, die einen Wärmetransport von einem Inneren des Gehäuses nach außen ermöglicht.

Eine solche Einrichtung ist beispielsweise aus der WO 2009/062534 A1 bekannt. Bei der bekannten elektrischen Einrichtung handelt es sich um ein Modul eines Umrichters. Das Modul umfasst Halbleiterbauelemente, die von einem Modulgehäuse umschlossen sind. Die Kühlvorrichtung umfasst bei der bekannten Einrichtung zwei Kühlplatten, die zum Transport der in den Halbleiterbauelementen erzeugten Wärme nach außen eingerichtet sind. Die Kühlplatten sind derart angeordnet, dass sie dabei einen Teil der Gehäusewandung ausbilden.

Auch andere elektrische Einrichtungen, insbesondere in der Hoch- und Mittelspannungstechnik, wie beispielsweise Kondensatoren einer Kondensatorbank (engl. ,capacitor bank') müssen mit Gehäusen versehen werden, die mit einer Kühlvorrichtung ausgestattet sind. Solche Kondensatorbänke werden in Energie-übertragungseinrichtungen (meist in Verbindung mit entsprechenden Induktivitäten) zur Korrektur des Leistungsfaktors der Übertragung eingesetzt. Damit können insbesondere die Übertragungsleistung und die Qualität der Übertragung optimiert werden. US 2007/158946 A1 offenbart eine elektrische Einrichtung mit elektrischen Komponenten, die in einem Gehäuse angeordnet sind, das eine Kühlvorrichtung aufweist, die einen Wärmetransport von einem Inneren des Gehäuses nach außen ermöglicht. Die Einrichtung von D1 weist Dämpfungsmittel zur akustischen Dämpfung im Inneren entstehender Störgeräusche auf.

Die Aufgabe der vorliegenden Erfindung besteht darin, eine eingangs genannte elektrische Einrichtung vorzuschlagen, die möglichst vielseitig einsetzbar ist.

Die Aufgabe wird bei einer artgemäßen Einrichtung dadurch gelöst, dass die Einrichtung ferner Dämpfungsmittel zur akustischen Dämpfung im Inneren entstehender Störgeräusche aufweist.

Eine elektrische Einrichtung gemäß der Erfindung ist mit den Merkmalen des Anspruchs 1 definiert und eine elektrische Anlage gemäß der Erfindung ist mit den Merkmalen des Anspruchs 9 definiert.

Der Erfindung liegt die Erkenntnis zugrunde, dass bei Anwendungen der Einrichtung bei einer Wechselspannung die elektrische Komponente der Einrichtung mechanischen Anregungen ausgesetzt sein kann. Beispielsweise treten in einem Wechselspannungsnetz außer einer Grundfrequenz von üblicherweise 50 Hz ebenfalls höherfrequente Harmonische mit Frequenzen bis zu mehreren Tausend Herz auf. Aufgrund dieser hohen Frequenzen wird die elektrische Komponente, beispielsweise ein Kondensator der Kondensatorbank, derart mechanisch angeregt, dass es zu einer starken Geräuschentwicklung innerhalb des Gehäuses der Einrichtung kommen kann. Diese Störgeräusche können auch in einem von Menschen wahrnehmbaren Frequenzspektrum auftreten. Wird die elektrische Einrichtung beziehungsweise eine elektrische Anlage, in der die Einrichtung eingesetzt wird, in der Nähe von menschlichen Siedlungen betrieben, so muss der Betreiber der Einrichtung bzw. Anlage bezüglich etwaiger Höchstwerte der Störgeräusche üblicherweise strenge Auflagen erfüllen. Mit der erfindungsgemäßen elektrischen Einrichtung können solche Auflagen erfüllt werden, wodurch vorteilhaft die Einrichtung besonders vielseitig einsetzbar ist, nämlich auch dort, wo relativ strenge Obergrenzen für Störgeräusche, die in der Einrichtung entstehen, vorgegeben sind.

Die Kühlvorrichtung umfasst wenigstens eine Kühlöffnung im Gehäuse, die zum Wärmetransport durch Konvektion von im Inneren des Gehäuses erwärmter Luft nach außen eingerichtet ist. Bei der Erwärmung im Betrieb der Einrichtung gibt die elektrische Komponente Wärme über ihr Komponentengehäuse an die sie umgebende Luft ab. Dadurch erwärmt sich diese Luft und steigt durch Konvektion nach oben. Die Wärme kann also durch die sich bevorzugt in einem oberen Teil, beispielsweise in einer Abdeckung des Gehäuses befindende Kühlöffnung nach außen entweichen. Zur Gewährleistung eines kontinuierlichen Luftstroms kann auf der gegenüber liegenden Unterseite des Gehäuses eine gleichartige Kühlöffnung vorgesehen werden. Auf diese Weise ist eine besonders einfache im Aufbau und kostengünstige Kühlvorrichtung bereitgestellt. Dadurch ist ebenfalls möglich, besonders einfache Dämpfungsmittel vorzusehen. Die Dämpfungsmittel können hierbei beispielsweise eine geeignete Abdeckung der wenigstens einen Kühlöffnung umfassen. Zweckmäßigerweise sind mehrere Kühlöffnungen sowohl unterhalb als auch oberhalb der wenigstens einen elektrischen Komponente vorgesehen. Dies garantiert eine möglichst gute Konvektion im Gehäuse.

Als besonders bevorzugt wird angesehen, wenn die Kühlvorrichtung eine Mehrzahl von schlitzartigen Kühlöffnungen umfasst, die zum Wärmetransport durch Konvektion von im Inneren des Gehäuses erwärmter Luft nach außen eingerichtet sind.

Vorzugsweise ist die wenigstens eine Kühlöffnung oberhalb von vertikalen Wandungen der wenigstens einer elektrischen Komponente angeordnet. Aus eigenen Untersuchungen folgt, dass die meiste Wärme von den vertikalen Oberflächen der Wandungen der elektrischen Komponenten abgegeben wird. Durch die Positionierung der Kühlöffnungen oberhalb der vertikalen Wandungen kann demnach die beste Kühlwirkung erzielt werden. Die Dämpfungsmittel sind vorzugsweise derart angeordnet, dass ein Luftstrom, der durch die wenigstens eine Kühlöffnung nach außen gelangt, durch die Dämpfungsmittel geleitet wird. Dabei werden die durch die Kühlöffnung nach außen dringenden Störgeräusche akustisch gedämpft. Durch die für eine optimale Wärmeabfuhr geeignete Anordnung der Kühlöffnungen kann eine besonders gute Balance zwischen einer guten Kühlwirkung und einer guten akustischen Dämpfung erreicht werden. Eine Begrenzung der Kühlwirkung aufgrund einer Verringerung der Konvektion kann somit vermieden werden.

Besonders vorteilhaft ist es, wenn mehrere Kühlöffnungen vorgesehen sind, wobei wenigstens eine Kühlöffnung unterhalb von wenigstens einer vertikalen Wandung der wenigstens einen elektrischen Komponente angeordnet ist.

Gemäß einer bevorzugten Ausführungsform der Erfindung ist die wenigstens eine elektrische Komponente ein Kondensator. Ein oder mehrere der Kondensatoren können innerhalb eines Gehäuses der elektrischen Einrichtung angeordnet sein, wobei Kondensatoranschlüsse aus dem Gehäuse herausgeführt sind. Jeder der Kondensatoren kann ein eigenes quaderförmiges Komponentengehäuse aufweisen. Je nach Anwendung ist selbstverständlich auch eine andere Form der Komponentengehäuses denkbar. Die Kühlvorrichtung kann Kühlöffnungen umfassen, die im Gehäuse oberhalb und/oder unterhalb der vertikalen Oberflächen der Komponentengehäuse angeordnet sind.

Gemäß der Erfindung umfassen die Dämpfungsmittel eine Umlenkvorrichtung zum Umlenken eines aus dem Inneren entweichenden Luftstromes. Die Dämpfungsmittel können beispielsweise wenigstens einen Luftkanal umfassen. Der Luftkanal kann beispielsweise an eine oder mehrere der Kühlöffnungen anschließen. Aus dem Gehäuse entweichende Luft wird somit durch den Luftkanal gelenkt, bevor sie nach außen gelangt. Die Umlenkvorrichtung sorgt mit dem Umlenken des Luftstromes für eine akustische Dämpfung der Störgeräusche. Die Umlenkvorrichtung kann sowohl innerhalb als auch auf einer Außenseite des Gehäuses angeordnet sein. Die Umlenkvorrichtung ist geeigneterweise derart ausgebildet, dass der Luftstrom durch die Umlenkvorrichtung möglichst nicht beeinträchtigt wird. Dies kann beispielsweise durch eine geeignete Dimensionierung des Luftkanals erreicht werden.

Für eine zusätzliche akustische Dämpfung kann es von Vorteil sein, wenn die Dämpfungsmittel ein geräuschdämpfendes Material aufweisen. Das geräuschdämpfende Material kann beispielsweise ein geeignetes Gewebe, ein poröses Material mit offenen oder geschlossenen Poren oder Ähnliches sein. Das geräuschdämpfende Material kann beispielsweise an einer Innenseite des Gehäuses angebracht sein. Es kann insbesondere aber auch an der Umlenkvorrichtung, beispielsweise im Luftkanal angebracht sein. Die Störgeräusche werden beim Entweichen des Luftstroms durch die Umlenkvorrichtung bzw. den Luftkanal nach außen zusätzlich gedämpft.

Es wird als besonders vorteilhaft angesehen, wenn die Dämpfungsmittel zum Verringern der Lautstärke der Störgeräusche um mindestens 10 dB, vorzugsweise mindestens 20 dB, eingerichtet sind. Auf diese Weise können auch besonders strenge Anforderungen bezüglich der Störgeräusche erfüllt werden.

Gemäß der Erfindung umfassen die Dämpfungsmittel eine Dämpfungshaube, die oberhalb der wenigstens einen Kühlöffnung angeordnet ist, und die auf ihrer der Kühlöffnung zugewandten Seite mit einem geräuschdämpfenden Material versehen ist. Auf diese Weise ist eine besonders einfache im Aufbau und effiziente akustische Dämpfung bereitgestellt. Die Dämpfungshaube kann beispielsweise mittels Schraubverbindungen außen am Gehäuse befestigbar sein. Geeigneterweise weist die Dämpfungshaube eine oder mehrere Austrittsöffnungen auf, durch die der Luftstrom nach außen gelangen kann. Zwischen der Kühlöffnung bzw. den Kühlöffnungen und der wenigstens einen Austrittsöffnung ist somit ein Luftkanal bereitgestellt, mittels dessen der Luftstrom umgelenkt werden kann. Die wenigstens eine Austrittsöffnung ist vorzugsweise gegenüber der wenigstens einen Kühlöffnung versetzt angeordnet. Bevorzugt weist die Dämpfungshaube vertikale Seitenflächen auf, die sich von einer Oberseite des Gehäuses senkrecht nach oben erstrecken, wobei die wenigstens eine Austrittsöffnung an wenigstens einer der Seitenflächen angeordnet ist. Der nach oben durch die wenigstens eine Kühlöffnung aufsteigende Luftstrom wird somit in eine dazu senkrechte Richtung abgelenkt. Die Dämpfungshabe weist dabei den zusätzlichen Vorteil auf, dass ein Eintritt von Verschmutzung oder Fremdkörper in das Gehäuse erschwert wird. Vorteilhaft kann vermieden werden, dass Schnee, Sand oder kleine Lebewesen wie beispielsweise Insekten durch die Kühlöffnungen von oben herab in das Gehäuse gelangen können.

Die Dämpfungsmittel können ferner eine untere Dämpfungshaube umfassen, die unterhalb der wenigstens einer Kühlöffnung angeordnet ist, und die auf ihrer der Kühlöffnung zugewandten Seite mit einem geräuschdämpfenden Material versehen ist. Insbesondere können Kühlöffnungen, die in einer Unterseite des Gehäuses angeordnet sind, von der unteren Dämpfungshaube bedeckt sein. Die Dämpfungshaube und die untere Dämpfungshaube können gleichartig aufgebaut sein.

Ein von der Dämpfungshaube überdeckter Teil des Gehäuses ist außen und/oder innen mit einem geräuschdämpfenden Material versehen.Zur verbesserten Dämpfung der Störgeräusche kann auch ein von der unteren Dämpfungshaube überdeckter Teil des Gehäuses außen und/oder innen mit einem geräuschdämpfenden Material versehen sein.

Bevorzugt sind die Dämpfungsmittel dazu eingerichtet, Störgeräusche zu dämpfen, die in einem Frequenzbereich zwischen 100 Hz und 5 kHz liegen. Besonders vorteilhaft ist es, wenn eine maximale akustische Dämpfungsfähigkeit der Dämpfungsmittel in einem Frequenzbereich zwischen 100 Hz und 5 kHz liegt. In diesem Frequenzbereich liegen die aufgrund von hochfrequenten Harmonischen erzeugten Störgeräusche, die zu dämpfen sind.

Die Erfindung betrifft ferner eine elektrische Anlage, umfassend wenigstens eine elektrische Einrichtung mit einem Gehäuse und mit wenigstens einer elektrischen Komponente, die in dem Gehäuse angeordnet ist, wobei das Gehäuse eine Kühlvorrichtung aufweist, die einen Wärmetransport von einem Inneren des Gehäuses nach außen ermöglicht.

Eine solche Anlage ist aus der bereits zuvor genannten Druckschrift WO 2009/062534 A1. Die dort beschriebene Anlage ist ein Umrichter mit einer Mehrzahl von Modulen, die jeweils ein Modulgehäuse aufweisen, in dem Halbleiterkomponenten angeordnet sind. Die Kühlvorrichtung ist hierbei in Form von Kühlplatten gegeben, die einen Teil des Gehäuses ausbilden. Ebenfalls bekannt sind Kondensatorbänke, die zur Blindleistungskompensation in Wechselspannungsnetzen eingesetzt werden. Eine Kondensatorbank weist eine Mehrzahl von Kondensatoren auf, die in einem Gehäuse angeordnet sind.

Die Aufgabe der Erfindung ist es, eine artgemäße elektrische Anlage anzugeben, die möglichst vielseitig einsetzbar ist.

Die Aufgabe wird bei einer artgemäßen Anlage dadurch gelöst, dass die Kühlvorrichtung Dämpfungsmittel zur Dämpfung im Inneren entstehender Störgeräusche aufweist.

Die Vorteile der erfindungsgemäßen Anlage ergeben sich insbesondere aus der Verwendung der erfindungsgemäßen elektrischen Einrichtung, die mit den Dämpfungsmitteln ausgestattet ist.

Insbesondere kann die erfindungsgemäße Anlage auch dort eingesetzt werden, wo strenge Auflagen bezüglich der Geräuschentwicklung als Voraussetzung eines Einsatzes gegeben sind.

Gemäß der erfindungsgemäßen Anlage bildet die elektrische Einrichtung zumindest einen Teil einer Kondensatorbank, wobei eine Mehrzahl der elektrischen Komponenten in dem Gehäuse der elektrischen Einrichtung angeordnet ist, wobei die elektrischen Komponenten Kondensatoren sind.

Im Bezug auf die erfindungsgemäße Anlage sind im Übrigen alle zuvor beschriebenen Varianten der erfindungsgemäßen Einrichtung einsetzbar.

Die Erfindung soll im Folgenden anhand der in den Figuren 1, 2 und 3 dargestellten Ausführungsbeispiele weiter erläutert werden.
Figur 1 zeigt ein Ausführungsbeispiel einer erfindungsgemäßen elektrischen Anlage in einer schematischen Darstellung;
Figur 2 zeigt ein erstes Ausführungsbeispiel einer erfindungsgemäßen elektrischen Komponente in einer schematischen Darstellung;
Figur 3 zeigt ein zweites Ausführungsbeispiel einer erfindungsgemäßen elektrischen Komponente in einer schematischen Darstellung.

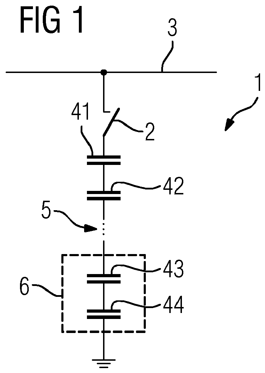

Im Einzelnen zeigt Figur 1 eine elektrische Anlage in Form einer Kondensatorbank 1, die mittels eines geeigneten Schalters 2 mit einer Phasenleitung 3 eines mehrphasigen Wechselspannungsnetzes verbindbar ist.

Die Kondensatorbank 1 umfasst eine geerdete Reihenschaltung mehrerer Kondensatoren 41-44. In Figur 1 sind lediglich vier Kondensatoren 41-44 graphisch dargestellt. Ihre Anzahl kann jedoch viel höher und von der jeweiligen Anwendung abhängig sein. Dies wurde in Figur 1 mittels eines unterbrochenen Linienabschnittes 5 angedeutet. Die Kondensatoren 43 und 44 sind in einem gemeinsamen Gehäuse angeordnet und bilden damit die Komponenten einer elektrischen Einrichtung 6.

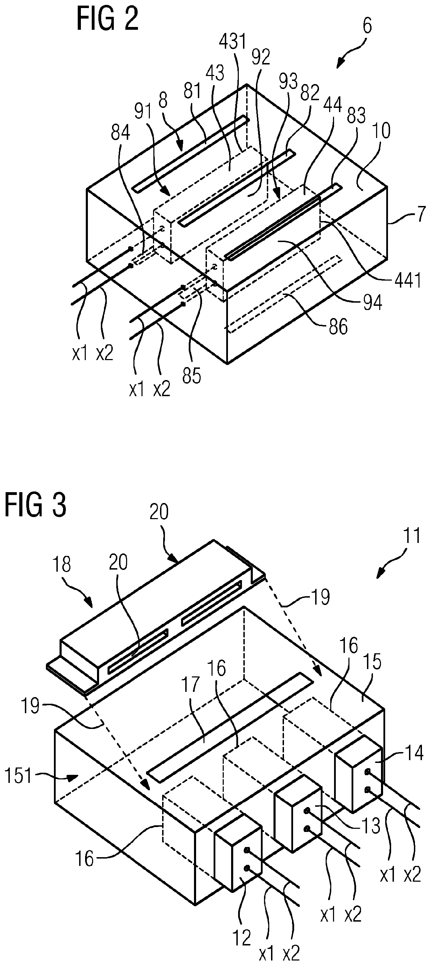

Auf den Aufbau der elektrischen Einrichtung 6 wird im Folgenden in den Figuren 2 und 3 näher eingegangen.

In Figur 2 ist ein erstes Ausführungsbeispiel einer elektrischen Einrichtung 6 gemäß der Erfindung dargestellt. Die Einrichtung 6 umfasst ein Gehäuse 7, in dem die elektrischen Komponenten in Form von Kondensatoren 43 und 44 angeordnet sind. Jede der Komponenten 43 bzw. 44 weist ein Komponentengehäuse 431 bzw. 441 auf. Zudem weist jede der Komponenten zwei Anschlüsse X1 und X2 auf, die aus dem Gehäuse 7 herausgeführt sind.

Die Einrichtung 6 verfügt ferner über eine Kühlvorrichtung 8, die sechs Kühlöffnungen in Form von Kühlschlitzen 81 bis 86 umfasst. Drei untere Kühlschlitze 84-86 sind unterhalb der Komponenten 43, 44 im Gehäuse 7 angeordnet. Drei obere Kühlschlitze 81-83 sind oberhalb der Komponenten 43, 44 im Gehäuse 7 angeordnet. Die oberen Kühlschlitze 81-83 sind dabei oberhalb von vertikalen Oberflächen beziehungsweise Wandungen 91-94 der Komponentengehäuse 431, 441 positioniert, weil dort die meiste Wärme von den Komponenten 43, 44 in das Gehäuse 7 abgegeben wird.

Die Einrichtung 6 weist ferner Dämpfungsmittel 10 auf. Die Dämpfungsmittel 10 umfassen ein geräuschdämpfendes Material, das an der den Komponenten 43, 44 zugewandten Seite des Gehäuses 7 angebracht ist und dass die Innenoberfläche des Gehäuses 7 ganz oder teilweise bedeckt.

In Figur 3 ist ein zweites Ausführungsbeispiel einer elektrischen Einrichtung 11 dargestellt. Die Einrichtung 11 umfasst drei elektrische Komponenten 12, 13 und 14 in Form von Kondensatoren. Jede der Komponenten 12, 13, 14 weist zwei Anschlüsse X1 und X2 auf, die aus einem Gehäuse 15 der Einrichtung 11 herausgeführt sind. Jede der Komponenten 12, 13 und 14 weist ein quaderförmiges Komponentengehäuse 16 auf, die zum Teil aus dem Inneren 151 des Gehäuses 15 herausragen.

Die Einrichtung 11 weist eine Kühlvorrichtung auf, die eine längliche Kühlöffnung 17 umfasst, die im oberen Teil des Gehäuses 15 angeordnet ist. Die Kühlöffnung 17 ist insbesondere oberhalb der hinteren vertikalen Seitenflächen der Komponentengehäuse 16 angeordnet, um eine bestmögliche Kühlung zu gewährleisten.

Die Einrichtung 11 verfügt ferner über Dämpfungsmittel, die im vorliegenden Ausführungsbeispiel eine Dämpfungshaube 18 umfassen. Die Dämpfungshaube 18 in Figur 3 hat die Form eines nach unten hin geöffneten Quaders. Die Dämpfungshaube 18 ist abdeckend über der Kühlöffnung 17 angebracht, was in Figur 3 durch zwei unterbrochene Pfeile 19 angedeutet ist. Aus Gründen der Übersichtlichkeit ist die Dämpfungshaube 18 in einem nicht montierten Zustand dargestellt. Die Dämpfungshaube 18 umfasst ferner schlitzförmige Austrittsöffnungen 20 in den Seitenflächen der Dämpfungshaube 18, wovon zwei in der Darstellung der Figur 3 nicht sichtbar sind, da sie zu einer Hinterseite hin geöffnet sind. Die zur Kühlöffnung 17 hin gewandte Seite der Dämpfungshaube 18 ist ganz oder teilweise mit einem geräuschdämpfenden Material bedeckt. Ebenfalls ist die von der Dämpfungshaube 18 überdeckte Oberfläche des Gehäuses 7 mit einem geräuschdämpfenden Material bedeckt. Zudem kann vorzugsweise ebenfalls auf der Unterseite des Gehäuses 7 eine untere Dämpfungshaube vorgesehen sein, die in ihrem Aufbau der Dämpfungshaube 18 entspricht.

Die über die Flächen der Komponentengehäuse abgegebene Wärme verursacht einen Luftstrom, der innerhalb des Gehäuses 15 nach oben aufsteigt. Der Luftstrom wird durch die Kühlöffnung 17 nach außen geführt. Dabei muss der Luftstrom zuvor den Luftkanal passieren, der durch die Dämpfungshaube 18 gebildet ist. Der Luftstrom wird dabei umgelenkt und gelangt schließlich durch die schlitzartigen Austrittsöffnungen 20 nach außen. Die vom Luftstrom getragenen Störgeräusche werden bei dem Durchgang durch die Dämpfungshaube 18 um insgesamt ca. 20 dB gedämpft.

## Patentansprüche

1. Elektrische Einrichtung (6) mit wenigstens einer elektrischen Komponente (43, 44), die ein Kondensator ist, die in einem Gehäuse (7) angeordnet ist, das eine Kühlvorrichtung (8) aufweist, die einen Wärmetransport von einem Inneren des Gehäuses (7) nach außen ermöglicht, wobei die Kühlvorrichtung (8) wenigstens eine Kühlöffnung (81 - 86) im Gehäuse (7) umfasst, die zum Wärmetransport durch Konvektion von im Inneren des Gehäuses (7) erwärmter Luft nach außen eingerichtet ist, und dass
die Einrichtung (6) Dämpfungsmittel (10) zur akustischen Dämpfung im Inneren entstehender Störgeräusche aufweist, wobei die Dämpfungsmittel (10) eine Dämpfungshaube (18) umfassen, die oberhalb der wenigstens einen Kühlöffnung (17) angeordnet ist, und die auf ihrer der Kühlöffnung zugewandten Seite mit einem geräuschdämpfenden Material versehen ist, und wobei ein von der Dämpfungshaube überdeckter Teil des Gehäuses mit einem geräuschdämpfenden Material versehen ist.

2. Einrichtung (6) nach Anspruch 1, wobei die Kühlvorrichtung (8) eine Mehrzahl von schlitzartigen Kühlöffnungen (81 - 86) umfasst, die zum Wärmetransport durch Konvektion von im Inneren des Gehäuses (18) erwärmter Luft nach außen eingerichtet sind.

3. Einrichtung (6) nach Anspruch 1 oder 2, wobei die wenigstens eine Kühlöffnung (81 - 83) oberhalb von wenigstens einer vertikalen Wandung (91 - 94) der wenigstens einer elektrischen Komponente (43, 44) angeordnet ist.

4. Einrichtung (6) nach Anspruch 3, wobei mehrere Kühlöffnungen (81-86) vorgesehen sind, wobei wenigstens eine Kühlöffnung (84 - 86) unterhalb von wenigstens einer vertikalen Wandung (91 - 94) der wenigstens einen elektrischen Komponente (43, 44) angeordnet ist.

5. Einrichtung (6) nach einem der vorangehenden Ansprüche, wobei die Dämpfungsmittel (10) eine Umlenkvorrichtung zum Umlenken eines aus dem Inneren entweichenden Luftstromes umfassen.

6. Einrichtung (6) nach einem der vorangehenden Ansprüche, wobei die Dämpfungsmittel (10) ein geräuschdämpfendes Material aufweisen.

7. Einrichtung (6) nach einem der Ansprüche 1 bis 6, wobei die Dämpfungsmittel (10) eine untere Dämpfungshaube (18) umfassen, die unterhalb der wenigstens einer Kühlöffnung angeordnet ist, und die auf ihrer der Kühlöffnung zugewandten Seite mit einem geräuschdämpfenden Material versehen ist.

8. Einrichtung (6) nach Anspruch 7, wobei ein von der unteren Dämpfungshaube überdeckter Teil des Gehäuses mit einem geräuschdämpfenden Material versehen ist.

9. Elektrische Anlage (1), umfassend wenigstens eine elektrische Einrichtung (6) mit einem Gehäuse (7) und mit wenigstens einer elektrischen Komponente (43, 44), die ein Kondensator ist, die in dem Gehäuse (7) angeordnet ist, wobei das Gehäuse (7) eine Kühlvorrichtung (8) aufweist, die einen Wärmetransport von einem Inneren des Gehäuses nach außen ermöglicht, wobei die Kühlvorrichtung (8) wenigstens eine Kühlöffnung (81 - 86) im Gehäuse (7) umfasst, die zum Wärmetransport durch Konvektion von im Inneren des Gehäuses (7) erwärmter Luft nach außen eingerichtet ist, und dass
die Einrichtung ferner Dämpfungsmittel (10) zur Dämpfung im Inneren entstehender Störgeräusche aufweist, wobei die Dämpfungsmittel (10) eine Dämpfungshaube (18) umfassen, die oberhalb der wenigstens einen Kühlöffnung (17) angeordnet ist, und die auf ihrer der Kühlöffnung zugewandten Seite mit einem geräuschdämpfenden Material versehen ist, und wobei ein von der Dämpfungshaube überdeckter Teil des Gehäuses mit einem geräuschdämpfenden Material versehen ist.

10. Elektrische Anlage (1) nach Anspruch 9, wobei die Anlage eine Blindleistungskompensationsanlage ist, wobei die elektrische Einrichtung (6) zumindest einen Teil einer Kondensatorbank ausbildet, wobei eine Mehrzahl der elektrischen Komponenten (43, 44) in dem Gehäuse (7) der elektrischen Einrichtung (6) angeordnet ist, wobei die elektrischen Komponenten (43, 44) Kondensatoren sind.

## Claims

1. Electrical device (6) having at least one electrical component (43, 44), which is a capacitor, which is arranged in the housing (7) which has a cooling apparatus (8) which allows heat to be transported from an interior of the housing (7) to the outside, wherein the cooling apparatus (8) comprises at least one cooling opening (81-86) in the housing (7), which cooling opening is designed for transporting heat from air heated in the interior of the housing (7) to the outside by means of convection, and wherein the device (6) has damping means (10) for acoustically damping interfering noise created in the interior, wherein the damping means (10) comprise a damping hood (18) which is arranged above the at least one cooling opening (17) and which is provided with a noise-damping material on its side which faces the cooling opening, and wherein a portion of the housing that is covered by the damping hood is provided with a noise-damping material.

2. Device (6) according to Claim 1, wherein the cooling apparatus (8) comprises a plurality of slot-like cooling openings (81-86) which are designed for transporting heat from air heated in the interior of the housing (18) to the outside by means of convection.

3. Device (6) according to Claim 1 or 2, wherein the at least one cooling opening (81-83) is arranged above at least one vertical wall (91-94) of the at least one electrical component (43, 44) .

4. Device (6) according to Claim 3, wherein a plurality of cooling openings (81-86) are provided, wherein at least one cooling opening (84-86) is arranged below at least one vertical wall (91-94) of the at least one electrical component (43, 44).

5. Device (6) according to one of the preceding claims, wherein the damping means (10) comprise a deflection apparatus for deflecting an airflow escaping from the interior.

6. Device (6) according to one of the preceding claims, wherein the damping means (10) comprise a noise-damping material.

7. Device (6) according to one of Claims 1 to 6, wherein the damping means (10) comprise a lower damping hood (18) which is arranged below the at least one cooling opening and which is provided with a noise-damping material on its side facing the cooling opening.

8. Device (6) according to Claim 7, wherein a portion of the housing covered by the lower damping hood is provided with a noise-damping material.

9. Electrical installation (1), comprising at least one electrical device (6) having a housing (7) and having at least one electrical component (43, 44), which is a capacitor, which is arranged in the housing (7), wherein the housing (7) has a cooling apparatus (8) which allows heat to be transported from an interior of the housing to the outside, wherein the cooling apparatus (8) comprises at least one cooling opening (81-86) in the housing (7), which cooling opening is designed for transporting heat from air heated in the interior of the housing (7) to the outside by means of convection, and wherein the device further has damping means (10) for damping interfering noise created in the interior, wherein the damping means (10) comprise a damping hood (18) which is arranged above the at least one cooling opening (17) and which is provided with a noise-damping material on its side which faces the cooling opening, and wherein a portion of the housing that is covered by the damping hood is provided with a noise-damping material.

10. Electrical installation (1) according to Claim 9, wherein the installation is a reactive power compensation installation, wherein the electrical device (6) forms at least a portion of a bank of capacitors, wherein a plurality of the electrical components (43, 44) are arranged in the housing (7) of the electrical device (6), wherein the electrical components (43, 44) are capacitors.

## Revendications

1. Dispositif (6) électrique ayant au moins un composant (43, 44) électrique, qui est un condensateur, qui est disposé dans un boîtier (7), lequel a un système (8) de refroidissement, qui rend possible un transport de chaleur de l'intérieur du boîtier (7) à l'extérieur,
dans lequel
le système (8) de refroidissement comprend au moins une ouverture (81 à 86) de refroidissement du boîtier (7), qui est conçue pour le transport de chaleur par convection de l'air chauffé à l'intérieur du boîtier (7) à l'extérieur et en ce que le dispositif (6) a des moyens (10) d'atténuation acoustique de bruits perturbateurs se créant à l'intérieur, dans lequel les moyens (10) d'atténuation comprennent une hotte (18) d'atténuation, qui est disposée au-dessus de la au moins une ouverture (17) de refroidissement et qui est pourvue d'un matériau atténuant le bruit sur sa face tournée vers l'ouverture de refroidissement et dans lequel une partie du boîtier, recouverte par la hotte (18) d'atténuation, est pourvue d'un matériau d'atténuation du bruit.

2. Dispositif (6) suivant la revendication 1, dans lequel le système (8) de refroidissement comprend une pluralité d'ouvertures (81 à 86) de refroidissement de type en fente, qui sont conçues pour le transport par convection à l'extérieur de l'air chauffé à l'intérieur du boîtier (18).

3. Dispositif (6) suivant la revendication 1 ou 2, dans lequel la au moins une ouverture (81 à 83) de refroidissement est au-dessus d'au moins une paroi (91 à 94) verticale du au moins un composant (43, 44) électrique.

4. Dispositif (6) suivant la revendication 3, dans lequel il est prévu plusieurs ouvertures (81 à 86) de refroidissement, au moins une ouverture (84 à 86) de refroidissement étant en-dessous d'au moins une paroi (91 à 94) verticale du au moins un composant (43, 44) électrique.

5. Dispositif (6) suivant l'une des revendications précédentes, dans lequel les moyens (10) d'atténuation comprennent un système de déviation, pour dévier un courant d'air s'échappant de l'intérieur.

6. Dispositif (6) suivant l'une des revendications précédentes, dans lequel les moyens (10) d'atténuation ont un matériau atténuant le bruit.

7. Dispositif (6) suivant l'une des revendications 1 à 6, dans lequel les moyens (10) d'atténuation comprennent une hotte (18) inférieure d'atténuation, qui est en-dessous de la au moins une ouverture de refroidissement et qui est pourvue d'un matériau atténuant le bruit sur sa face tournée vers l'ouverture de refroidissement.

8. Dispositif (6) suivant la revendication 7, dans lequel une partie recouverte par la hotte inférieure d'atténuation du boîtier est pourvue d'un matériau atténuant le bruit.

9. Installation (1) électrique, comprenant au moins un dispositif (6) électrique ayant un boîtier (7) et au moins un composant (43, 44) électrique, qui est un condensateur, qui est disposé dans le boîtier (7), dans laquelle le boîtier (7) a un système (8) de refroidissement, qui rend possible un transport de chaleur de l'intérieur du boîtier à l'extérieur,
dans lequel
le système (8) de refroidissement comprend au moins une ouverture (81 à 86) de refroidissement du boîtier (7), qui est conçue pour le transport de chaleur par convection vers l'extérieur de l'air chauffé à l'intérieur du boîtier (7) et en ce que le dispositif a en outre des moyens (10) d'atténuation pour l'atténuation des bruits perturbateurs se créant à l'intérieur, les moyens (10) d'atténuation comprenant une hotte (18) d'atténuation, qui est disposée au-dessus de la au moins une ouverture (17) de refroidissement et qui est pourvue d'un matériau atténuant le bruit sur sa face tournée vers l'ouverture de refroidissement et dans laquelle une partie, recouverte par la hotte d'atténuation, du boîtier est pourvue d'un matériau atténuant le bruit.

10. Installation (1) suivant la revendication 9, dans laquelle l'installation est une installation de compensation de la puissance réactive, le dispositif (6) électrique constituant au moins une partie d'une rampe de condensateurs, dans laquelle une pluralité des composants (83, 44) électriques est disposée dans le boîtier (7) du dispositif (6) électrique, les composants (43, 44) électriques étant des condensateurs.
